# FASCICULE DE BREVET EUROPEEN

(11) **EP 0 570 253 B1**
(45) Date de publication et mention de la délivrance du brevet: **12.07.1995**
(21) Numéro de dépôt: 93401117.2
(22) Date de dépôt: 29.04.1993
(51) Int. Cl.: A22C 11/12

(54) **Dispositif pour maintenir, attacher, nouer et éventuellement trancher des boyaux**
Vorrichtung zum Halten, Verschliessen und eventuell Trennen von Wursthüllen
Device for holding, tying and eventually cutting casings

(30) Priorité: 15.05.1992 FR 9205913
(43) Date de publication de la demande: 18.11.1993
(73) Titulaire: Turroques, Serge, F-81000 Albi (FR)
(72) Inventeur: Turroques, Serge, F-81000 Albi (FR)
(74) Mandataire: Boutin, Antoine

(56) Documents cités:
- DE-C- 1 072 187
- FR-A- 1 137 231
- FR-A- 1 149 381
- FR-A- 2 576 751
- FR-A- 2 627 455
- FR-A- 2 664 470

## Description

L'invention est relative à un dispositif pour maintenir, attacher, nouer et éventuellement trancher des boyaux, un module de nouage et des lames associées.

L'invention s'applique en particulier à la fabrication en continu de produits de charcuterie, notamment du type saucisse ou saucisson.

Dans ce type de fabrication, la manipulation d'outils tranchants présente des risques de coupure pour le personnel et de pollution bactérienne pour le produit fabriqué.

On connaît des machines de remplissage automatique de boyaux pour la fabrication de produits de charcuterie et des machines de nouage de boyaux remplis, mais on ne connaît pas de machine apte simultanément à maintenir, attacher, nouer et/ou trancher des boyaux.

La présente invention a pour but de créer un nouveau dispositif pour maintenir, attacher, nouer et/ou trancher des boyaux avant, pendant ou après leur remplissage.

L'invention permet ainsi d'envisager, grâce à une construction modulaire, une fabrication automatique en continu de produits de charcuterie.

L'invention a pour objet un dispositif pour maintenir, attacher, nouer des boyaux, caractérise en ce que le dispositif comporte au moins une plaque conformée d'un premier côté en module de nouage par coopération avec une forme apte à être accolée le long d'une surface d'accolement, telle qu'un plan, et conformée du côté opposé audit premier côté pour recevoir des moyens de pincement du boyau rempli de charcuterie.

Selon d'autres caractéristiques de l'invention :
- le dispositif comporte en outre des moyens de tranchage de boyau disposés au voisinage du module de nouage et des moyens de pincement,
- le module de nouage comporte deux plaques recevant à coulissement un premier moyen d'injection de ficelle et un deuxième moyen de pincement et de traction sur la ficelle, lesdites plaques munies d'un canal de guidage de la ficelle injectée étant aptes à se déplacer l'une par rapport à l'autre en partant d'une position d'accolement suivant un plan pour libérer la ficelle et en permettre le nouage,
- les moyens d'injection et de pincement de ficelle comportent des cannes tubulaires traversées par la ficelle en au moins un emplacement,
- le module comporte en outre des moyens de tension et de centrage du noeud sensiblement dans l'axe du produit de charcuterie,
- les moyens de pincement comportent au moins une première lame et une deuxième lame montées à pivotement autour d'un axe commun, de manière à pivoter en sens inverse l'une de l'autre pour pincer le boyau sensiblement dans l'axe du produit de charcuterie,
- une lame est conformée en peigne avec des lamelles adjacentes et espacées, aptes à recevoir une lame coopérante de pincement dans un espace entre des lamelles,
- une lame de tranchage de boyau est disposée dans un espace entre deux lamelles dudit peigne,
- le dispositif comporte deux modules de nouage espacés d'une distance prédéterminée et adjacents à au moins un module de pincement,
- entre les deux modules de nouage est disposé à coulissement un couteau de tranchage de boyau, de manière à couper le boyau entre deux noeuds.

L'invention concerne également des lames de pincement ou de tranchage aptes à être montées sur un dispositif selon l'invention, présentant les particularités suivantes :
- le contour intérieur de la lame de pincement présente une forme enveloppant l'ouverture circulaire de passage du produit de charcuterie en position ouverte et réalisant le pincement dans l'axe dudit produit,
- le contour intérieur de la lame de pincement présente une forme généralement circulaire avec un angle sortant,
- le contour intérieur de la lame de tranchage présente une forme généralement circulaire avec un angle sortant réalisant le tranchage.

L'invention sera mieux comprise grâce à la description qui va suivre donnée à titre d'exemple non limitatif au regard des dessins annexés dans lesquels :

La figure 1 représente schématiquement une vue en perspective simplifiée d'un module de nouage de dispositif selon l'invention.

Les figures 2 à 4 représentent schématiquement des vues en section transversale respectivement selon les lignes II-II à IV-IV de la figure 1.

Les figures 5 et 6 représentent schématiquement le fonctionnement d'un module analogue au module de nouage de la figure 1.

Les figures 7A et 7B représentent schématiquement la coupe de boyau(x) rempli(s) après nouage à l'aide d'un module selon l'invention.

La figure 8 représente schématiquement une vue de face avec arrachement partiel d'un dispositif selon l'invention.

La figure 9 représente schématiquement l'agencement respectif des lames de maintien et de tranchage du dispositif de la figure 8.

La figure 10 représente schématiquement une vue en coupe partielle selon la ligne X- X de la figure 8 d'un dispositif selon l'invention.

La figure 11 représente schématiquement une vue en coupe analogue à la figure 11 d'un autre dispositif selon l'invention.

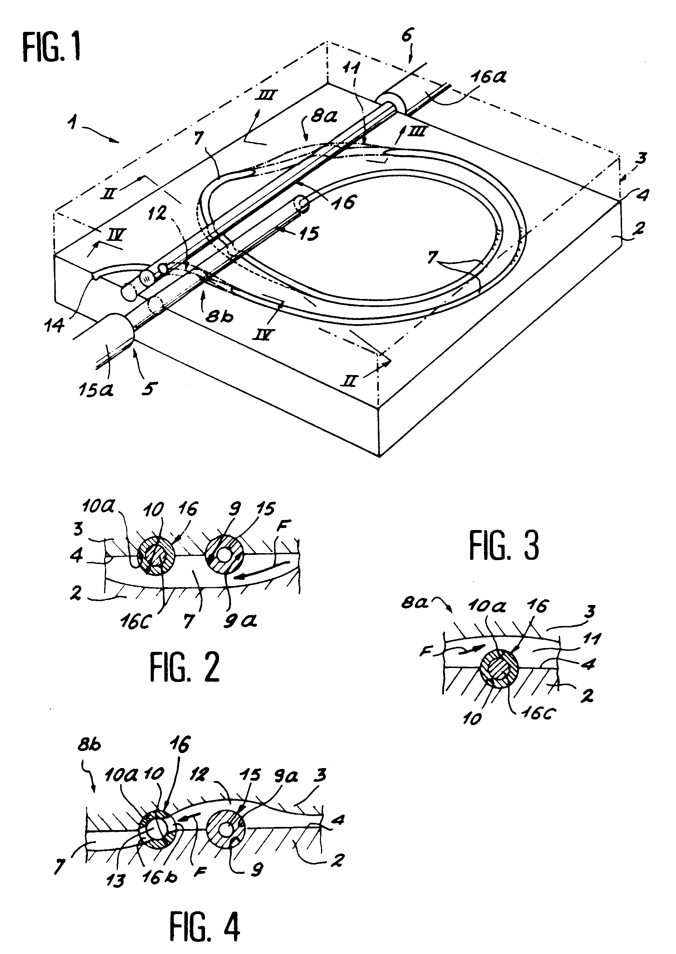

En référence aux figures 1 à 4, un module de nouage 1 selon l'invention comporte deux plaques 2 et 3 accolées l'une à l'autre le long d'un plan de jonction 4, un premier moyen 5 d'injection de ficelle de nouage et un deuxième moyen 6 de saisie et de traction sur la ficelle de nouage.

La première plaque 2 représentée en traits pleins est munie d'une rainure 7 quasi-continue en forme de spirale et à section sensiblement en forme de demi-cercle, éventuellement interrompue en deux endroits 8a, 8b et de deux logements 9, 10 de formes correspondantes à celles des moyens 5 et 6. Les logements 9 et 10 sont dans cet exemple conformés en rainures rectilignes de section semi-circulaire et sensiblement parallèles l'une à l'autre.

La deuxième plaque 3 représentée en traits mixtes est munie de deux rainures en demi-lunes 11 et 12 en communication avec la rainure 7 précitée, de manière à ce qu'une ficelle injectée par exemple par soufflage au moyen d'air comprimé passe à l'intérieur du premier moyen 5 soit propulsée successivement à travers la rainure 7, la rainure 11 à l'endroit où la rainure 7 est éventuellement interrompue, la rainure 7, la rainure 12 à l'endroit où la rainure 7 est éventuellement interrompue, un logement de pinçage 13 du deuxième moyen 6 et la rainure 7 dont elle débouche par un orifice 14.

Le contour de la ficelle injectée correspond ainsi à la constitution d'un noeud du type appelé communément "noeud de cabestan".

La deuxième plaque 3 comporte éventuellement un logement 9a complémentaire du logement 9 pour le moyen d'injection 5 et un logement 10a complémentaire du logement 10 pour le moyen 6 de saisie et de traction.

Les logements 9a et 10a sont de préférence sensiblement symétriques des logements 9 et 10 par rapport au plan 4 d'accolement des plaques 2 et 3, de manière à constituer des logements dans lesquels les moyens 5 et 6 sont montés à coulissement dans un sens avantageusement parallèle au plan 4 d'accolement.

Le moyen d'injection 5 comporte une canne tubulaire 15 dont le diamètre intérieur permet le passage de la ficelle, montée à coulissement dans le logement 9-9a et comportant une extrémité élargie 15a constituant une butée de translation lors de l'actionnement de la canne 15 par des moyens appropriés, par exemple du type vérin pneumatique à air comprimé.

Le moyen 6 de saisie et de traction comporte également une canne tubulaire 16 et une butée de translation 16a.

La canne tubulaire 16 comporte deux orifices 16b de passage pour la ficelle, sensiblement diamétralement opposés, ainsi qu'une tige 16c apte à pincer la ficelle passant à travers les orifices 16b sous l'action de moyens tels qu'un vérin pneumatique.

La ficelle ainsi pincée est rendue solidaire de la canne 16 lors du déplacement en translation des cannes 15 et 16 sous l'action de moyens appropriés, ce qui permet de serrer le noeud de cabestan formé par la ficelle.

Dans l'exemple représenté, la ficelle injectée par la canne 15 propulsée à l'intérieur de la rainure 7 passe comme l'indique la flèche tout d'abord à l'extérieur des cannes 15 et 16 et du côté de la plaque 2 par rapport au plan 4, continue sa trajectoire en forme de spirale à l'intérieur de la rainure 7, puis à l'extérieur de la canne 16 et du côté de la plaque 3 par rapport au plan 4, puis à l'intérieur de la rainure 7 dans la plaque 2, puis à l'extérieur de la canne 15 et du côté de la plaque 3 par rapport au plan 4 pour passer à travers les orifices 16b et le logement 13 de pinçage de la canne 16, puis à nouveau dans la rainure 7 sur la plaque 2 pour déboucher à l'extérieur par l'orifice 14.

Avantageusement selon l'invention, un au moins des logements 9-9a, 10-10a ne traverse pas entièrement le plan 4 d'accolement auquel le canal de guidage est adjacent cette disposition permet de simplifier la fabrication et de raccorder l'extrémité du logement 9-9a correspondant à la canne d'injection 15 directement et continûment avec l'origine du canal de guidage défini par les rainures 7, 11 et 12 adjacentes au plan 4 d'accolement des plaques 2 et 3.

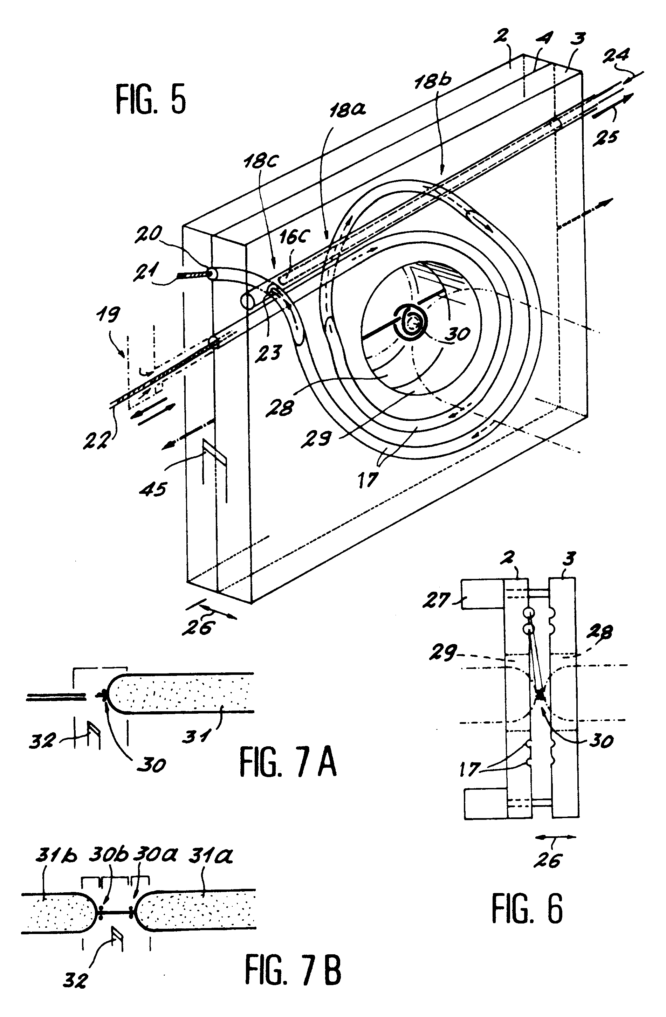

En référence aux figures 5 et 6, les repères de chiffres identiques désignent des éléments identiques ou similaires à ceux des figures 1 à 4.

Le canal de guidage 17 de la ficelle, de section sensiblement circulaire, est fraisé à mi-épaisseur dans chaque plaque 2 ou 3 et à des profondeurs plus importantes aux endroits 18a, 18b, 18c correspondant à des contournements des cannes tubulaires non représentées d'injection et de pinçage de ficelle.

Dans cet exemple, la ficelle est entraînée par un écoulement d'air symbolisé en 19 à l'intérieur du canal de guidage 17 jusqu'à ressortir par un orifice 20 en présentant son extrémité 21.

L'autre extrémité 22 est maintenue par des moyens de pinçage non représentee, tandis que la ficelle est pincée en 23 par la canne de pincement selon un mouvement de pincement au moyen d'une tige intérieure, mouvement repéré par la flèche 24.

Les extrémités de la ficelle sont tendues par le déplacement au moins de la canne de pincement dans le sens de la flèche 25 de manière à tendre la ficelle à l'intérieur du canal de guidage 17.

L'écartement relatif de la plaque 2 par rapport à la plaque 3 selon le sens repéré par 26 est obtenu par des moyens d'actionnement 27 tels que des vérins pneumatiques à faible course.

Cet écartement permet à la ficelle en tension de se resserrer davantage à l'intérieur d'ouvertures circulaires 28 et 29 respectivement dans les plaques 3 et 2 jusqu'à fermeture du noeud de cabestan 30 centré au milieu de l'ouverture par des moyens non représentés.

On comprend qu'un boyau (représenté en traits mixtes) passant à travers les ouvertures 28 et 29 est alors noué au moyen d'un noeud de cabestan 30, séparant ainsi par exemple deux saucisses adjacentes d'un chapelet.

En référence aux figures 7A et 7B, le produit de charcuterie 31 (respectivement les produits 31a et 31b) est coupé au-delà du noeud 30 (respectivement entre les noeuds 30a et 30b) par un organe tranchant 32 présentant un bord affûté par exemple en biseau. Selon l'invention, on réalise ainsi simultanément le nouage et le tranchage automatique de produits de charcuterie et de boyaux constituant l'enveloppe desdits produits.

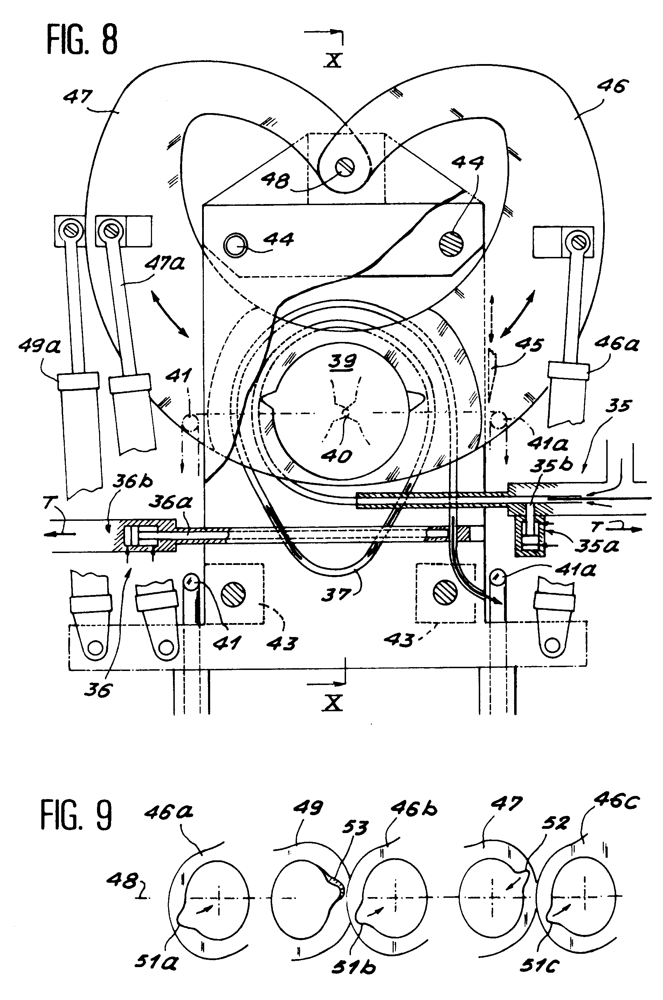

En référence aux figures 8 à 10, un dispositif selon l'invention comporte une plaque 33 qui présente la disposition suivante :
- du côté d'un plan d'accolement 34, la plaque 33 présente des usinages aptes à recevoir à coulissement un moyen 35 d'injection et de maintien de ficelle et un moyen 36 de pincement et de traction sur une ficelle, et des usinages constituant un logement 37 apte à recevoir et guider la ficelle injectée par le moyen 35.

Le moyen 35 conformé de manière analogue à celui représenté à la figure 5 comporte en outre un vérin pneumatique à air comprimé 35a ou analogue apte à pincer la ficelle en 35b.

Le moyen 36 comporte une tige 36a solidaire de et actionné directement par un petit vérin pneumatique 36b.

Les déplacements d'ensemble des cannes tubulaires dans le sens des flèches T sont obtenus de préférence par d'autres vérins pneumatiques ou analogues, non représentés par souci de clarté, mais que l'homme du métier sait disposer pour obtenir de par le coulissement des cannes tubulaires dans leurs logements respectifs la traction de la ficelle, puis la fermeture du noeud de cabestan.

Le produit de charcuterie passant à travers des ouvertures sensiblement circulaires 38 et 39 correspondantes est ainsi ficelé par fermeture totale du noeud de cabestan : cette fermeture totale du noeud est réalisée de préférence dans l'axe 40 de symétrie commun aux deux ouvertures 38 et 39, grace à des moyens centreurs de ficelle 41 et 41a, représentés en traits pleins en position abaissée et schématisés en traits mixtes sous forme de barres de tension aptes à se déplacer sensiblement perpendiculairement au sens de coulissement des cannes tubulaires de manière à ce que la ficelle soit tendue et nouée en étant contenue sensiblement dans un plan diamétral commun aux ouvertures 38 et 39.

Pour permettre le glissement de la ficelle lors de la fermeture du noeud de cabestan, on prévoit avantageusement un déplacement relatif entre la plaque 33 et une plaque complémentaire 42 portant des usinages complémentaires, ledit déplacement étant obtenu par des moyens d'actionnement 43 du type vérin pneumatique à faible course, par exemple de course comprise entre 1 et 5 mm et étant guidé par coulissement sur des barres 44.

Après nouage complet, la ficelle est sectionnée par au moins un organe tranchant 45, de type couteau ou analogue, apte à se déplacer en translation parallèlement au mouvement des barres 41a ou 41 pour couper la ficelle tendue par lesdites barres 41a ou 41 sensiblement suivant un plan diamétral commun aux ouvertures 38 et 39.

Dans ce cas, il reste au moins un excédent de ficelle correspondant à un brin de longueur égale à la distance comprise entre le couteau 45 et l'axe 40 du produit de charcuterie. Ce brin est avantageusement utilisé pour l'accrochage des produits de charcuterie ou leur conditionnement.

La deuxième fonction de la plaque 33 est de porter des moyens de pincement de boyau du côté opposé au plan d'accolement 34 de la plaque 33 et de la plaque 42. Les moyens de pincement et de maintien de boyau comportent :
- des lames de pincement 46, 47 montées à pivotement autour d'un axe de rotation 48 avantageusement commun et actionnées par des vérins pneumatiques à air comprimé respectivement 46a et 47a,
- éventuellement une lame de tranchage 49 actionnée à pivotement autour de l'axe de rotation 48 par un vérin associé 49a.

Dans l'ouverture circulaire 39, on prévoit avantageusement une pièce conique 50 en matière plastique de qualité alimentaire, apte à guider le produit de charcuterie tout en évitant l'introduction accidentelle d'une main. La pièce conique 50 présente un diamètre légèrement inférieur à celui de l'ouverture circulaire 39.

Avantageusement, la lame de pincement 46 est constituée en forme de peigne avec des lamelles adjacentes et solidaires entre elles 46a, 46b, 46c.

Dans l'espace compris entre deux lamelles successives 46a-46b ou 46b-46c, une lame de pincement 47 ou une lame de tranchage 49 est montée de manière à pivoter autour de l'axe 48 en sens inverse du sens de pivotement des lamelles 46a à 46c.

Selon l'invention, le contour intérieur des lames de pincement 46 et 47 ou le contour intérieur de lames de tranchage 49 présente une forme enveloppant l'ouverture circulaire 39 en position ouverte des lames, ladite forme réalisant en position fermée le pincement (ou le tranchage) sensiblement au voisinage de l'axe 40 en position fermée des lames correspondantes.

Ce contour constitué de préférence par découpe dans une tôle présente une forme généralement circulaire avec un angle sortant 51a, 51b, 51c, 52 et 53 respectivement.

Comme représenté sur la figure 9, la lame de tranchage 49 est affûtée au moins du côté de l'angle sortant 53, de manière à trancher nettement le boyau ou le produit de charcuterie simultanément sur toute sa surface extérieure et éviter tout effilochage ou déchirure du boyau.

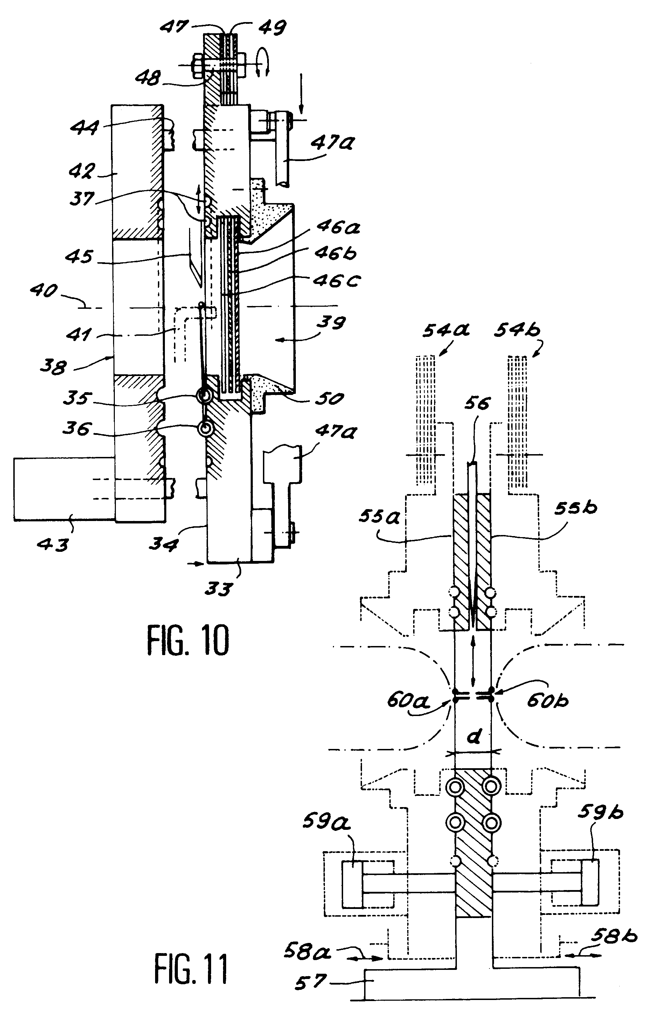

En référence à la figure 11, un autre dispositif selon l'invention assemblé de façon modulaire comporte :
- deux modules de pincement de boyau 54a, 54b symbolisés par des peignes de lames de pincement de boyaux,
- entre lesdits modules de pincement de boyau, sont disposés deux modules de nouage de boyau 55a, 55b symbolisés par les plans d'accolement respectifs dans lesquels le nouage de deux noeuds en cabestan est effectué à une distance prédéterminée correspondant sensiblement à l'écartement des plans 55a, 55b.
- une lame 56 de tranchage de boyau entre les deux noeuds de cabestan. Dans cet exemple, la disposition générale est avantageusement symétrique et comporte une plaque centrale 57 munie d'un pied fixe, par rapport à laquelle les modules de pincement 54a, 54b se déplacent dans le sens des flèches 58a, 58b sous l'action de vérins 59a, 59b lors du nouage de produit de charcuterie en 60a et 60b; les noeuds 60a et 60b étant de préférence tendus et centrés par des moyens non représentés, des couteaux non représentés coulissant parallèlement auxdits moyens pour couper la ficelle de nouage.

Le couteau 56 vient trancher le boyau selon une séquence prédéterminée en fonction de la longueur désirée du chapelet de produits de charcuterie fabriqués ou entre tous les couples de noeuds 60a, 60b pour obtenir des saucissons séparés les uns des autres.

L'invention permet ainsi la fabrication automatique de produits de charcuterie.

Bien que décrite en référence à des modes de réalisation particuliers, l'invention n'y est nullement limitée.

Le canal de guidage de la ficelle peut par exemple présenter une forme différente apte à constituer un noeud après écartement des plaques correspondantes et serrage par des moyens constituant des équivalents techniques. Les orientations relatives des déplacements ne sont données qu'à titre indicatif et on pourra remplacer toute translation par une rotation ou un autre mouvement accomplissant la même fonction ; il en est de même des organes d'actionnement correspondants.

## Revendications

1. Dispositif pour maintenir, attacher, nouer des boyaux, comportant au moins une première plaque (2,33) conformée d'un premier côté (4, 34, 55a, 55b) en module de nouage par coopération avec une deuxième plaque (3, 42) apte à être accolée le long d'une surface d'accolement (4, 34, 55a, 55b) telle qu'un plan, et conformée du côté opposé audit premier côté (4, 34, 55a, 55b) pour recevoir des moyens de pincement (46, 47, 46a, 46b, 46c; 54a, 54b) du boyau rempli de charcuterie; le dispositif comportant en outre des moyens de tranchage (49, 56) de boyau disposés au voisinage du module de nouage et lesdits moyens de pincement ; le module comportant les deux plaques (2, 3; 33, 42) recevant à coulissement un premier moyen (5) d'injection de ficelle et un deuxième moyen (6) de pincement et de traction sur la ficelle, lesdites plaques (2, 3 ; 33, 42) munies d'un canal de guidage (7,11,12) de la ficelle injectée étant aptes à se déplacer l'une par rapport à l'autre en partant d'une position d'accolement suivant un plan (4, 34, 55a, 55b) pour libérer la ficelle et en permettre le nouage ; les moyens d'injection (5) et de pincement (6) de ficelle comportant des cannes tubulaires (15, respectivement 16) traversées par la ficelle en au moins un emplacement (13, 16b).

2. Dispositif selon la revendication 1, caractérisé en ce que le module de nouage comporte en outre des moyens de tension et de centrage (41, 41a) du noeud sensiblement dans l'axe (40) du produit de charcuterie.

3. Dispositif selon la revendication 1 ou la revendication 2, caractérisé en ce que les moyens de pincement (46, 47) comportent au moins une première lame (46) et une deuxième lame (47) montées à pivotement autour d'un axe commun (48), de manière à pivoter en sens inverse l'une de l'autre pour pincer le boyau sensiblement dans l'axe (40) du produit de charcuterie.

4. Dispositif selon la revendication 3, caractérisé en ce qu'une lame (46) est conformée en peigne avec des lamelles (46c, 46b, 46c) adjacentes et espacées, aptes à recevoir une lame coopérante (47) de pincement dans un espace entre des lamelles (46b, 46c).

5. Dispositif selon la revendication 1 et la revendication 4, caractérisé en ce qu'une lame (49) de tranchage de boyau est disposée dans un espace entre deux lamelles (46a, 46b) dudit peigne (46).

6. Dispositif selon l'une des revendications 1 à 5, caractérisé en ce que le dispositif comporte deux modules de nouage (55a, 55b) espacés d'une distance prédéterminée (d) et adjacents à au moins un module de pincement (54a ou 54b).

7. Dispositif selon la revendication 6, caractérisé en ce que, entre les deux modules de nouage (55a, 55b) est disposé à coulissement un couteau de tranchage (56) de boyau, de manière à couper le boyau entre deux noeuds (60a, 60b).

8. Dispositif selon la revendication 3, caractérisé en ce que le dispositif comporte une lame de pincement (46, 47) dont le contour intérieur présente une forme enveloppant l'ouverture circulaire (39) de passage du produit de charcuterie en position ouverte et réalisant le pincement dans l'axe (40) dudit produit.

9. Dispositif selon la revendication 8, caractérisé en ce que le contour intérieur de la lame de pincement (46, 47) présente une forme généralement circulaire avec un angle sortant (51a, 51b, 51c, 52).

10. Dispositif selon la revendication 5 ou la revendication 6, caractérisé en ce que le dispositif comporte une lame de tranchage (49) dont le contour intérieur présente une forme généralement circulaire avec un angle sortant (53) réalisant le tranchage.

## Claims

1. Device for holding, tying and knotting casings containing cooked meat; said device comprising a knotting unit with at least a first plate (2, 33) formed with a first side (4, 34, 55a, 55b) for cooperation with a second plate (3, 42) capable of being placed alongside along a surface (4, 34, 55a, 55b) such as a plane and formed by the side of the first plate opposite to the said first side (4, 34, 55a, 55b) for accommodating means (46, 47, 46a, 46b, 46c; 54a, 54b) for pinching a casing filled with cooked meat; the device also comprising means for cutting the casing (49, 56) disposed in the vicinity of the knotting unit and said pinching means; the knotting unit comprising the two plates (2, 3; 33, 42) receiving by sliding a first means (5) for inserting string and a second means (6) for pinching and drawing the string, said plates (2, 3; 33, 42) being equipped with a guiding channel (7, 11, 12) for the inserted string and being capable of moving in relation to one another along a plane (4, 34, 55a, 55b) leaving an adjacent position to release the string and permit knotting; whereas the means of inserting (5) and pinching the string (6) comprise tubular rods (15, 16 respectively) crossed by the string in at least one place (13, 16b).

2. Device according to Claim 1, characterised in that the knotting unit also comprises means for tightening and centring (41, 41a) the knot roughly in the axis (40) of the cooked meat product.

3. Device according to Claim 1 or Claim 2, characterised in that the pinching means (46, 47) comprise at least one first blade (46) and one second blade (47) mounted for pivoting about a common axis (48) in order to pivot in an opposite direction to one another to pinch the casing roughly in the axis (40) of the cooked meat product.

4. Device according to Claim 3, characterised in that one blade (46) is formed as a comb with adjacent and spaced out blades (46a, 46b, 46c) capable of receiving a corresponding pinching blade (47) in a space between the blades (46b, 46c).

5. Device according to Claim 1 and Claim 4, characterised in that a casing cutting blade (49) is disposed in a space between two blades (46a, 46b) of said comb (46).

6. Device according to one of Claims 1 to 5, characterised in that the device comprises two knotting units (55a, 55b) spaced at a predetermined distance (d) and adjacent to at least one pinching unit (54a or 54b).

7. Device according to Claim 6, characterised in that between the two knotting units (55a, 55b) a sliding casing cutting knife (56) is disposed for cutting the casing between two knots (60a, 60b).

8. Device according to Claim 3, characterised in that the device comprises a pinching blade (46, 47) the inner contour of which forms a shape enveloping the circular opening (39) of the passage of the cooked meat product in an open position and performs the pinching in the axis (40) of said product.

9. Device according to Claim 8, characterised in that the inner contour of the pinching blade (46, 47) is generally circular with a projecting angle (51a, 51b, 51c, 52).

10. Device according to Claim 5 or Claim 6, characterised in that the cutting means comprises a cutting blade (49) the inner shape of which is a generally circular with a projecting angle (53) performing the cutting.

## Patentansprüche

1. Vorrichtung zum Halten, Befestigen, Verschließen von Wurstdärmen, bestehend aus mindestens einer ersten Platte (2, 33), die auf einer ersten Seite (4, 34, 55a, 55b) als Verschließmodul in Zusammenwirkung mit einer zweiten Platte (3, 42) geformt ist, welche an eine Paßfläche (4, 34, 55a, 55b) wie z. B. eine Ebene angelegt werden kann, und die auf der der genannten ersten Seite (4, 34, 55a, 55b) gegenüber-liegenden Seite so geformt ist, daß sie Klemmittel (46, 47, 46a, 46b, 46c; 54a, 54b) für den mit Wurstware gefüllten Wurstdarm aufnimmt; wobei die Vorrichtung ferner Mittel zum Durchschneiden (49, 56) von Wurstdarm aufweist, die in der Nähe des Verschließmoduls und der genannten Klemmittel angeordnet sind; wobei das Modul die beiden Platten (2, 3; 33, 42) aufweist, die ein erstes Mittel (5) zum Einschießen der Schnur und ein zweites Mittel (6) zum Klemmen und Ziehen der Schnur gleitend aufnehmen, wobei die genannten, mit einem Führungskanal (7, 11, 12) für die eingeschossene Schnur versehenen Platten (2, 3; 33, 42) sich ausgehend von einer Paßposition in einer Ebene (4, 34, 55a, 55b) gegeneinander verschieben können, um die Schnur freizugeben und ihr Verschließen zu ermöglichen; wobei die Mittel zum Einschießen (5) und Mittel zum Klemmen (6) der Schnur aus Rohren (15 bzw. 16) bestehen, durch die an mindestens einer Stelle (13, 16b) die Schnur läuft.

2. Vorrichtung nach Anspruch 1,
dadurch gekennzeichnet,
daß das Verschließmodul ferner Mittel zum Spannen und Zentrieren (41, 41a) des Knotens im wesentlichen auf der Achse (40) der Wurstware aufweist.

3. Vorrichtung nach Anspruch 1 oder 2, dadurch gekennzeichnet, daß die Klemmittel (46, 47) aus mindestens einem ersten Arm (46) und einem zweiten Arm (47) bestehen, die um eine gemeinsame Achse (48) schwenkbar befestigt sind, so daß sie in entgegengesetzten Richtungen schwenken können, um den Wurstdarm im wesentlichen auf der Achse (40) der Wurstware einzuklemmen.

4. Vorrichtung nach Anspruch 3, dadurch gekennzeichnet, daß ein Arm (46) in Form eines Kamms mit nebeneinanderliegenden und voneinander beabstandeten Plättchen (46a, 46b, 46c) ausgeführt ist, die geeignet sind, einen zusammenwirkenden Klemmarm (47) in einem Zwischenraum zwischen den Plättchen (46b, 46c) aufzunehmen.

5. Vorrichtung nach Anspruch 1 und Anspruch 4, dadurch gekennzeichnet, daß eine Klinge (49) zum Durchschneiden von Wurstdarm in einem Zwischenraum zwischen zwei Plättchen (46a, 46b) des genannten Kamms (46) angeordnet ist.

6. Vorrichtung nach einem der Ansprüche 1 bis 5, dadurch gekennzeichnet, daß die Vorrichtung zwei Verschließmodule (55a, 55b) aufweist, die mit einem vorherbestimmten Abstand (d) voneinander und angrenzend an mindestens ein Klemmodul (54a oder 54b) angeordnet sind.

7. Vorrichtung nach Anspruch 6, dadurch gekennzeichnet, daß zwischen den beiden Verschließmodulen (55a, 55b) ein Messer zum Durchschneiden (56) von Wurstdarm gleitend angeordnet ist, so daß es den Wurstdarm zwischen zwei Knoten (60a, 60b) durchschneidet.

8. Vorrichtung nach Anspruch 3, dadurch gekennzeichnet, daß die Vorrichtung einen Klemmarm (46, 47) aufweist, dessen Innenkontur eine Form hat, die die kreisförmige Öffnung (39) für den Durchlaß der Wurstware in offener Stellung umschließt und das Klemmen auf der Achse (40) der genannten Ware gewährleistet.

9. Vorrichtung nach Anspruch 8, dadurch gekennzeichnet, daß die Innenkontur des Klemmarms (46, 47) eine allgemein kreisförmige Form mit einer hervorstehenden Ecke (51a, 51b, 51c, 52) aufweist.

10. Vorrichtung nach Anspruch 5 oder Anspruch 6, dadurch gekennzeichnet, daß die Vorrichtung eine Schneidklinge (49) aufweist, deren Innenkontur eine allgemein kreisförmige Form mit einer hervorstehenden Ecke (53) aufweist, die das Durchschneiden gewährleistet.
